# EUROPEAN PATENT APPLICATION

(11) **EP 4 398 028 A1**
(43) Date of publication of application: **10.07.2024**
(21) Application number: 23305012.9
(22) Date of filing: 04.01.2023
(51) Int. Cl.: G02F 1/137, G02F 1/133, E06B 3/67, E06B 9/24

(54) **METHOD FOR OPERATING A LIQUID CRYSTALS SWITCHABLE STACK AND SAID SWITCHABLE LIQUID CRYSTALS STACK**

(71) Applicant: Saint-Gobain Glass France, 92400 Courbevoie (FR); Brilliant Optronics Co., Ltd, Kaohsiung City 81349 (TW)
(72) Inventor: LI, Cheng-Chang, 81349 Kaohsiung (TW); CHANG, Li-Min, 81349 Kaohsiung (TW); LIN, Kuan-Wu, 81349 Kaohsiung (TW); LIN, Tsung-Hsien, 81349 Kaohsiung (TW); OZANAM, Cécile, 93300 Aubervilliers (FR)
(74) Representative: Saint-Gobain Recherche

(57) **Abstract**

The present invention provides a method for operation of a switchable stack to resolve the time delay in switching DSM switchable device from a transparent state to a hazy state. The method includes a off stage, a transitory stage and a operating stage.

## Description

The present invention relates to technologies for optoelectronic component and, more particularly, to a method for switching a switchable stack.

Conventional switchable devices based on liquid crystals molecules can be switched through electricity between transparent (clear) state to scattering state, the liquid crystals changing orientation and modify the diffuse light transmission while keeping total light transmission constant.

It exists various switchable liquid crystals devices, ones using drops of liquid crystals dispersed in polymer, such as PDLC (for Polymer Dispersed Liquid Cristals), or others including nematic layer with ions using Dynamic Scattering Mode (DSM), based on electrohydrodynamic effect induced by the dynamic balance between the rotation of the LC and the diffusion of the ions. The DSM switchable stack has these advantages (compared to PDLC):
- transparent clear state (very low Haze level) without voltage and even very low Haze even in large viewing angle, liquid crystals being for example perpendicular to substrates (the first alignment layers if homeotropic forcing the liquid crystals to align vertically in off state)
- scattering state (very hazy) with voltage, ions movement creating convection cells tending to orientate liquid crystals randomly
- reasonable driving frequency and driving voltage.

However, the liquid crystals in DSM stack cannot immediately switch from transparent state to scattering state and even also immediately return to the transparent state when stopping electrification.

In order to solve this issue, it is an objective of the present invention to provide a method for state switching of a switchable stack to improve visual effect of the switchable glass without penalizing overall performances of the device.

The invention also relates to a method for operating a switchable stack (based on dynamic scattering mode), comprising two transparent dielectric substrates (notably polymeric or glass, preferably flexible, notably thin), each of said substrates having one electrode layer (notably metal based or transparent conductive oxyde "TCO") and one alignment layer over the electrode layer, and, located between (and in contact with) the alignment layers (preferably both homeotropic), a liquid crystals based layer of a material comprising nematic liquid crystals (preferably rod like, one or more nematics type) - preferably with negative dielectric anisotropy- and ions(notably ion salt, in peculiar halide ions, zwiterion), for example the liquid crystals based layer extending over a length of at least 5 cm (even 10cm or 50cm, 1m) and a width of at least 1 cm (even 10cm, 50cm), (liquid crystals based layer having a given thickness preferably between 2 or 3µm to 30 or 40 µm, or even 6 or 8µm to 12 or 20µm), notably spacers being dispersed within said material), notably said liquid crystals based layer having a transition frequency,
such method comprising successively:
- an off stage, in which no voltage is applied to the switchable stack and the switchable stack is in a transparent (clear) state, (defined by a given minimum haze Hmin notably lower or equal to 5% preferably and even 2% or 1 %,), -notably in which it is possible to see through the stack-,
- (once a command is given for being scattering state) a transitory on stage, with application to the switchable stack, for a duration T1, of (preferably) alternating voltage U1 defined by a first root mean square voltage Ur1 with a given frequency f1 notably lower than the transition frequency or of continuous voltage (direct current voltage) having said value Ur1,
   (Ur1 and T1 are such that) the switchable stack passing from the transparent state to a first scattering state with first haze H1 of preferably at least 80% during the transitory on stage, preferably U1 is alternating, (pseudo)periodical, with continuous component being zero, in peculiar (pseudo)sinusoidal, and most preferably square form
- an operation stage, with application to the switchable stack of second alternating voltage U2 defined by a second root mean square voltage Ur2 with a given frequency f2 (lower than the transition frequency preferably equal to f1), second root mean square voltage Ur2 being lower than first root mean square voltage Ur1,
   (Ur2 is such that) the switchable stack passing from the first scattering state to a second scattering state defined by a second haze H2 greater or equal to 80%, during the operation stage, (H2 equal or distinct from H1 preferably higher).

U2 is preferably (pseudo)periodical, with continuous component being zero, in peculiar (pseudo)sinusoidal, and most preferably square form. H2 can be preferably close to maximal haze Hmax (defined of a saturation voltage Ursat), Hmax-H2 being less than 5% or 2% or 1%).

Therefore T1 is long enough to pass from transparent (clear) state to (predetermined) scattering state. T1 is preferably equal or slightly lower than 10ms.

Indeed, in conventional driving scheme, there is only one phase driving for example around 15V-20V. However, the power consumption (driving voltage) and the switching time are conflicted with each other.

The method proposes a fast switching on driving method based on enough high voltage "pulse" (new transitory on state) and maintained voltage (operation state) as low as possible for optical required performances.

The invention is notably based on a driving scheme combined with selected Ur1 and Ur2 voltages. It is a two-phase driving using a first phase which is the new transitory on stage and before initiating the operation stage. The purpose of the first phase is to accelerate the switching on time. The purpose of the second phase is to maintain the optical performance under a lower voltage. Thus, the accelerated switching on time, desired scattering performance with low power consumption are achieved.

The "overdriving" claimed method is meaningful because it can significantly improve the response time from several hundred ms (for example around ~200ms) to less than one or several ten ms (for example under 20ms or 10ms) and reduced power consumption from around 16.75W/m² to less than 2.25W/m² which is important for the practical use and energy savings.

The scattering level from U1 with Ur1 to U2 with Ur2 is maintained (or no significant optical change in term of perception for the viewer), which prove the benefit of using the claimed two-phase driving method.

Indeed, the proposed driving scheme not only accelerate the switching on time and but also maintain the scattering performance with reduced power consumption.

T1 is preferably chosen in function of the rising time of the liquid crystals based layer.

In a preferred embodiment, for said switchable stack, defining a first rising time Tr1 as response time from transparent to scattering (state) and defining a second rising time Tr2 as response time from transparent to scattering (state) when application of U2 to the switchable stack at frequency f2, said second rising time Tr2 is higher than first rising time Tr1 and T1 is lower to the second rising time Tr2.

In peculiar defining voltage Ur_{L2} as being as lowest root mean square voltage value at which an alternating voltage U2 at said given frequency f2, causes a haze value H_{L2} of the switchable stack to reach preferably at least 80%, Ur2 is greater or equal to Ur_{L2}, (H2 is greater or equal to H_{L2}).

Rise time is a classical response time from transparent to scattering. The rise time is dependent on the voltage. Whatever the liquid crystals material, in DSM mode, there is a maximum rising time corresponding to a given (too low) haze H0 lower than 80%, therefore lower than H2. Then the rising time decreases with the voltage. Then the rising time tends to saturate, equal or close to an asymptotic value.

The duration T1 of the first phase (U1 with Ur1) only needs to be equal or preferably little longer than the rise time. If T1 is shorter than the rise time Tr1, the liquid crystals can't be switched to the scattering state or only a semi-scattered state.
if the duration T1 is too longer than the rise time Tr1, since the rise time is saturated there is no real tangible benefit. Due to the consideration of energy consumption, it is less preferable to use a too much larger voltage for Ur1 in exchange for a slightly improved response time.

Tr1 and thereby T1 is a short time, below preferably 10ms, then when using alternating voltage is a complete waveform is not necessarily required and even a direct voltage is acceptable.

The haze is, for example, defined as the ratio of the diffuse transmission of light to the total transmission of light. It is expressed in %. We prefer measuring the haze using Hazemeter and notably Standard Haze meter like NDH7000, preferably using ASTM measurement standard (D1003). When haze H2 is less than 80%, its scattering degree is difficult to be used practically. Depending on customer demand we can choose H2 being lower or equal to Hmax which can be more than 80%.

The method is dedicated to dynamic scattering mode switching stack. Of course, preferred range of frequencies allow the dynamic scattering mode DMS. Therefore, at an excessively high given frequency (usually called transition frequency), the liquid crystals are not to be switched to the scattering state.

Also it is preferable that the given frequency f1 or f2 is not too low, in peculiar lower than 10 Hz, otherwise the violent ion accumulation is observed and cause additional poor electrooptic performance.

A best preferably given frequency f1 or f2 can be ranged in the driving scheme, depending on the liquid crystals choice. However, for all LC, it is preferably lower than 500Hz.

We expect that the rising time is very similar from 30Hz to 100Hz and increase when increasing the given frequency f1 or f2. Also the saturation voltage Usat corresponding to Hmax is almost the same from 30Hz to 100Hz and increases using the frequency higher than 100Hz. In peculiar there won't have differences between 50 Hz and 60 Hz because the liquid crystals mixture is not sensitive to the frequency in that range. Using 50Hz or 60Hz can depend oncountry regulations.

The saturation voltage increases as the frequency increased. The transition frequency is usually lower than 1000Hz The stack is switchable under different type of voltage function. However, the voltage function under square waveform has the lowest amplitude of voltage required.

Said first alternating signal U1 can be preferably periodic or pseudo periodic, with a continuous component being zero, with a frequency f1 preferably from 10Hz to 500Hz and more preferably lower than 200Hz and even 30 Hz to 100Hz. For simplicity we can choose 50Hz or 60Hz. And said second alternating signal is preferably periodic or pseudo periodic, with a continuous component being zero, with a frequency f2 preferably from 10Hz to 500Hz and more preferably lower than 200Hz and even from 30 Hz to 100Hz and more preferably f1 being equal to f2.

Preferably, for simplifying the design of the source and command, U1 is an alternating voltage and f1 is from 0.9f2 to 1.1f2 and even preferably f1=f2.

The invention uses preferably the rising time and in peculiar a set of (predetermined) rising times for (predetermined) voltages.

The rise time (at f1 or f2) is a response time commonly used in academic or commercial fields in liquid crystals. Notably, the rise time can be captured from a time-dependent scattering light measurement capturing the time interval during which a light intensity measurement varies from 90% (Imax-lmin) to 10% (Imax-Imin), Imax being the maximum light intensity in clear transparent state, Imax being the maximum light intensity in scattering state. Notably, the rise time can be captured from a time-dependent scattering light measurement capturing the time interval during which a collimated light intensity measurement varies from 90% (Imax-Imin) to 10% (Imax-Imin), Imax being the maximum light intensity (obtained in clear transparent state), Imin being the minimum light intensity (obtained in scattering state).

The measurement of the rise time can be based on the light intensity measurement using a collimated source such as laser source, notably He-Ne Laser at 632.8nm. The intensity measurement here is the light intensity measured by a sensor positioned exactly in front of a collimated source with a collection angle of +-2.5° the light beam from the source passing through the switchable stack between the source and the sensor. We can use a detector such as silicon photo Detectors.

Without the switchable stack, 100% of the signal would be measured. In the transparent clear state, there must be a small loss (transmission of the device + haze in the clear state which is non-zero); in the scattering state, there is a weak residual signal. Then the light intensity is in arbitrary unit.

If we have to make measurements at f1 and at f2 distinct from f1 preferably l1max is more or less equal l2max;.

Alternatively, and giving similar values, the rise timecan be defined as the time in which the Haze varies from 90% (Hmax-Hmin) to 10% (Hmax-Hmin), Hmin being the maximum haze in clear transparent state, Hmax being the maximum haze in scattering state. In that case, the associated measurement would be a time-resolved haze measurement.

Preferably If we have to make measurements at f1 and at f2 we have H1max= H2max.

We can select preferred ranges of T1 and/or Ur1 based on Tr1 (at f1).

Tr1 could itself be defined in function of remarkable (predetermined) rising time(s). Advantageously, the switchable stack can also be defined by a minimal rising time Trₘᵢₙ _as minimal response time from transparent (clear state) to scattering (state), when application of a given alternating voltage to the switchable stack at frequency f1-.

Trₘᵢₙ could be defined as an asymptotic value.

Defining also voltage Ur_{L1} as being a lowest root mean square voltage value at which alternating voltage at said frequency f1 causes a haze value of the switchable stack to reach 80%, the switchable stack is also defined by a reference rising time Tr_{L} as response time from transparent to scattering when application of voltage Ur_{L1} with to the switchable stack at said frequency f1.

Ur1 (higher or equal to Ur_{L1}) is preferably a voltage value in which the rising time Tr1 is lower or equal to Trₘᵢₙ +0.1(Tr_{L} - Trₘᵢₙ) or even to Trₘᵢₙ +0.05(Tr_{L} - Trₘᵢₙ) or more restrictively to Trₘᵢₙ +0.01 (Tr_{L} - Trₘᵢₙ) and/or lower or equal than 5Trₘᵢₙ.

T1 is lower than 1,3 Tr1 or even than 1,1 Tr1. and even equal to Tr1.

Therefore we fix (indirectly) several preferred lower limit of Ur1 (more or less restrictive) based on preferred (predetermined) upper limit of rising time. Then we fix the preferred upper limit of duration T.

Another way to fix upper limit for Ur1 is to say that Tr1 is lower or equal to 0.5*Tr_{L} or 0.2*Tr_{L} or even 0.1*Tr_{L} and/or Tr1 is lower or equal to Tr_{L}-50ms or Tr_{L}-80ms (Tr_{L} being more than 80ms). T1 is also lower than 1,3 Tr1 or even than 1,1 Tr1 and even equal to Tr1.

In addition we can fix (indirectly) several preferred upper limit of Ur1 (more or less restrictive) based on preferred (predetermined) lower limit of rising time.

Ur1 (higher or equal to Ur_{L1}) is preferably a voltage value for which :
- the rising time Tr1 is lower or equal to Trₘᵢₙ +0.005(Tr_{L} - Trₘᵢₙ) or even to Trₘᵢₙ +0.001 (Tr_{L} - Trₘᵢₙ) and/or lower than Trₘᵢₙ+1 ms or Trₘᵢₙ+0,5ms or Trₘᵢₙ+0,1ms.

Then we fix the lower limit of duration T: T1 is lower than 1,3 Tr1 or even than 1,1 Tr1. and even equal to Tr1.

In peculiar with the choice of Ur1, the duration T1 can be lower or equal than 20ms preferably even than 10ms and even than 5ms. T1 can be also lower than 1,3 Tr1 or even than 1,1 Tr1 and even is equal to Tr1.

The duration T1 is preferably such that a "mixed" switch on time Tsw required for the switchable stack to switch to second haze H2 (of least 80%) is less than 30ms, or 20ms, or even 10ms once applying U1 and U2.

Indeed, Tsw is equal to T1 plus the time for switching from Ur1 to Ur2.

The switching time Tsw in two-phase driving could be defined the sum of "rising time from 0 to Ur1" and a response time from Ur1 to Ur2 which can be no more than 5ms. The scattering from Ur1 to Ur2 does not have a significant optical change.

Ur2 can be a voltage value at which the second rising time Tr2 is more than 50% of said minimal rising time Trₘᵢₙ and/or more than 50ms or 80ms. Tr2- Tr1 can be more than 30ms or 50ms or 80ms also.

Ur1 is preferably at most 50V and/or Ur2 at most 25V or even 24V. Using voltage under 50V can help to fulfill countries regulations.

Ur1-Ur2 is preferably more than 5V, or 8V, or 10V, or 12V,or 15V. It is dependent on different liquid crystals materials. It can be limited by the driver and the consideration of the degree of reduction rise time due to the increased energy.

Regarding the choice of Ur2:
- Ur2 is lower or equal to Ur_{L2}+15 V or Ur_{L2}+10V or Ur_{L2}+1V and/or to 2Ur_{L2}
- Ur₂ being lower or equal to Ur_{L2} +5V and even or Ur_{L2} +1V and/or Ur₂<1,2 Ur_{L2} or <1,1Ur_{L2}.
if the Ur₂- Ur_{L} is large, it can be beneficial for enhancing the haze. However, the power consumption will be higher.

Of course if f1=f2 Ur_{L2}= Ur_{L1}.

In one preferred embodiment, first voltage is alternating and has square form and preferably second alternating voltage has square form, and notably f1=f2.

Then Ur1 is the maximum value of U1 and Ur2 is the maximum value of U2. Ur1 is preferably at most 50V and Ur2 is at most 25V.

During duration T1, the value of U1 can be only negative or positive (once the voltage rise time occurs) or both successively depending of the frequency choice and rising time. By way of example at 60Hz, for a duration T1 of 3ms, U1 is only positive or negative (once the voltage rise time occurs).

The method can comprise preferably successively after the operation stage, once an command of switch off is launched (on demand, human and automatically, sensors etc) another transitory stage, with application, for another duration T'1, to the switchable stack of another first alternative voltage U'1 defined by another first root mean square voltage U'r1, said another first root mean square voltage U'r1 being greater than said second root mean square voltage Ur2, and in peculiar U'r1 equal to first root mean square voltage Ur1, (U'r1 and T'1 are such that) the switchable stack passing from the second scattering state to another scattering state with a given haze (H'1) of preferably at least 80% during the transitory stage, notably H'1 being higher or equal to H2 (- then back to off stage).

In peculiar U'r1 is equal to first root mean square voltage Ur1 (and f1=f'1 and even f2) to simplify the command and/or power supply.

H'1 can be close to maximal haze Hmax (defined of a saturation voltage Ursat), Hmax-H'1 being less than 5% or 2% or 1%).

Said another duration T'1 is enough to allow the return to transparent (clear) state after stopping application of voltage (back to off stage). Said another duration T'1 is preferably less than 400ms.

Said another duration T1' is preferably defined in function of U'r1, Ur2.

For said switchable stack, defining a first decay time Td₁ as response time from scattering to transparent when stopping of voltage U'1 to the switchable stack at frequency f'1
for said switchable stack, defining a second decay time Td₂ as response time from scattering to transparent when stopping of voltage U2 to the switchable stack at frequency f2

The first decay time Td₁ is lower than the second decay time Td₂,

Said another duration T'1 being greater or equal to a transition time Tₐ from Ur2 to Ur'1 even at least 5 or 8 times greater than Tₐ.

Therefore in addition to fast switching on driving method, the method further proposes a fast switching off driving method based on enough high voltage "pulse" (new transitory on state) U'r1 to accelerate the switching off time. Thus, the accelerated switching off time, desired scattering performance with low power consumption are achieved.

The "overdriving" claimed method is meaningful because it can significantly improved the response time from 1s or several seconds (for example around ~2s) to less than one or several hundred ms (for example under ~400ms) and reduced power consumption which important for the practical use and energy savings.

The scattering level from U2 with Ur2 to U'1 with U'r1 is maintained (or no significant optical change in term of perception for the viewer), which prove the benefit of using the claimed two-phase driving method. Compared with the one-phase driving method, the two-phase driving speeds up the switching time and reduces the energy loss without sacrificing the haze.

Indeed, the proposed driving scheme not only accelerate the switching off time and but also maintain the scattering performance with reduced power consumption.

Decay time is a classical response time from scattering to transparent. The decay time is dependent on the voltage. Whatever the liquid crystals material, in DSM mode, there is a maximum decay time corresponding to a given haze lower than H2. Then the decay time decreases with the voltage. Then the decay time tends to saturate, equal or close to an asymptotic value.

The other duration T'1 (U'1 with U'r1) is chosen so that the switching off time T'sw is only dependant of U'r1 and not on Ur2 anymore.
if the other duration T'1 is too long, since the decay time is saturated there is no real tangible benefit. Due to the consideration of energy consumption, it is less preferable to use a too much larger voltage for U'r1 in exchange for a slightly improved response time.

Advantageously, the switchable stack can also be defined by a minimal decay time Tdₘᵢₙ as minimal response time from scattering to transparent when stopping application of a given voltage to the switchable stack at f'1.

And the switchable stack can be defined by voltage U'r_{L1} as being a lowest root mean square voltage value at which alternating voltage at said frequency f'1 causes the second haze H2 of the switchable stack

Defining a reference decay time Td_{L} when stopping application of said given voltage U'r_{L1} to the switchable stack at f'1.

Ur'1 (lower or equal to U'r_{L1}) is preferably a voltage value in which the decay time Td1 is lower or equal to Tdₘᵢₙ +0.1(Td_{L} - Tdₘᵢₙ) or even to Tdₘᵢₙ +0.05(Td_{L} - Tdₘᵢₙ) or more restrictively to Tdₘᵢₙ +0.01 (Td_{L} - Tdₘᵢₙ) and/or lower or equal than 5Tdₘᵢₙ.

Therefore we fix (indirectly) several preferred lower limit of U'r1 (more or less restrictive) based on preferred (predetermined) upper limit of decay time.

Another way to fix upper limit for U'r1 is to say that Td1 is lower or equal to 0.5*Td_{L} or 0.2*Td_{L} or even 0.1*Td_{L}.

In addition we can fix (indirectly) several preferred upper limit of U'r1 (more or less restrictive) based on preferred (predetermined) lower limit of decay time.

U'r1 (lower or equal to U'r_{L1}) is preferably a voltage value in which :
- Td1 is lower or equal to Tdₘᵢₙ +0.005(Td_{L} - Tdₘᵢₙ) or even to Tdₘᵢₙ +0.001 (Td_{L} - Tdₘᵢₙ) and/or lower than Tdₘᵢₙ+200ms or Tdₘᵢₙ+100ms or Tdₘᵢₙ+50ms. Td1 can be lower or equal to 1.1Td_{min.}

In peculiar with the choice of U'r1, the duration T'1 can be lower or equal than 200ms preferably even than 150ms.

The another duration T'1 is such that the switch off time T'sw required for the switchable stack to switch from said H2 of least 80% to transparent state is less than 1 or 0,5 seconds after applying U'1 after U2.

The another duration T'1 can be lower than 400ms, even 200ms or 150ms.

The another duration T'1 is preferably such that the switch off time T'sw required for the switchable stack to switch to haze H2 (of least 80%) from H'1 is less than 500ms once applying U2 and U'1.

The switching off time T's_{w} in two-phase driving could be defined as the sum of a T'1 and at least the decay time from U'r1 to 0. The scattering from Ur2 to U'r1 does not have a significant optical change.

Said first another alternating signal U'1 is preferably periodic or pseudo periodic, with a continuous component being zero, with a frequency f'1 preferably from 10Hz to 500Hz and even 30 to 100Hz, more preferably f'1 being equal to f2 and f1.

The first voltage, second voltage and said first another alternating voltage have also preferably square form at same frequency notably from 30 Hz to 100Hz.

The decay time is for example close to 3s at Ur2=15V. The decay time can be improved to 400ms at U'r1 being 40V.

Ur'1 is preferably at most 50V and/or Ur2 at most 25V or even 24V. Using voltage under 50V can help to fulfill countries regulations.

U'r1-Ur2 is preferably more than 5V, or 8V, or 10V,or 12V,or 15V. It is dependent on different liquid crystals materials. It can be limited by the driver and the consideration of the degree of reduction rise time due to the increased energy.

For the selection of the duration T1, the method can further comprise the furniture (or even the measurement or the calculation) of the datas corresponding to :
- the rising times Tr_{L}, Trmin etc
- Ur1 preferred values corresponding to preferred (upper limit) Tr1 as defined below
- Ur_{L1}, Ur_{L2}
- in peculiar the furniture of table or graph of the rising time versus voltage (for f1, f2 preferably f1=f2) at least starting from Ur_{L1}, Ur_{L2}
   and/or
- first haze H1, second haze H2, Hmin
- in peculiar the furniture of table or graph of the Haze versus voltage.

For the selection of the other duration T'1, the method can further comprise the furniture (or even the measurement) of the datas corresponding to :
- the decay times Td_{L}, Tdmin, etc
- in peculiar the furniture of table or graph of the decay time versus voltage (for f'1, preferably f'1=f2=f1).

The invention also deals with a system comprising :
- a switchable stack based on dynamic scattering mode, comprising two transparent substrates, each of them having one electrode and one alignment layer over the electrode, and, located between (and in contact with) the alignment layers, a liquid crystals based layer including liquid crystals with negative dielectric anisotropy and ions, notably the liquid crystals based layer extending over at least 5 cm of length and at least 1 cm of width
- a power supply source (able to apply alternating voltage to the switchable stack, during transitory switching on stage, said first root mean square voltage Ur1, for said duration T1, and said operation stage, said second root mean square voltage Ur2) for the implementation of the method as described before.

In a preferred embodiment, the power supply source is a generator of square periodic voltage at least with said first and second root mean square values Ur1 and Ur2 and even other root mean square value U'r1, at one frequency preferably between 30Hz to 100Hz, power supply source preferably including one or several circuits, each circuit with operational amplifier connected to resistances and capacitance in peculiar forming astable multivibrator.

The power supply source includes preferably one shared circuit for transitory on and off stage and one circuit for operation stage, each circuit with operational amplifier connected to resistances and capacitance in peculiar forming astable multivibrator.

The invention also proposes a glazing unit chosen among one or more of the following products: laminated glazing, double or triple glazing unit, curved or plane glazing, including said system as described before.

For example a laminated glazing (plane or curved) including:
- a first sheet transparent, plastic or glass (clear, extra clear, tinted), having first and second main faces
- a laminating interlayer (clear, extra clear, tinted) made of polymer notably PVB, EVA, in peculiar thermoplastic
- a second sheet transparent, plastic or glass (clear, extra clear, tinted), having third and four main faces, second and third faces facing each other, the switchable stack as defined previously being between second and third main faces and preferably embedded in the laminating interlayer.

For example a double or triple glazing unit comprising:
- a first sheet, transparent (clear, extra clear, tinted), preferably glass, having first and second main faces
- a second sheet, transparent (clear, extra clear, tinted), preferably glass, having third and four main faces, second and third faces facing each other,
- first and second sheet being spaced (by vacuum or gaz) and with a peripheral seal the switchable stack as defined previously being between second and third main faces (with adhesive etc) or on first or second main faces (with adhesive etc).

The CL layer can be sealed by any seal (polymeric etc) defined an active area.

A length of the active area can have a length superior of equal to 1 cm, preferably superior or equal to 5 cm and advantageously superior or equal to 10 cm.

A width of the active area can have a length superior of equal to 1 cm, preferably superior or equal to 5 cm and advantageously superior or equal to 10 cm.

A length of the glazing including the switchable stack can be superior of equal to 1 cm, preferably superior or equal to 5 cm and advantageously superior or equal to 10 cm.

A width of the glazing including the switchable stack can be superior of equal to 1 cm, preferably superior or equal to 5 cm and advantageously superior or equal to 10 cm. The invention is in peculiar dedicated to product (glazing unit etc) having a full surface able to be transparent or scattering notably for privacy effect and/or for preventing from (sun) light.

Any product can comprise one or more switchable stacks as already defined or one or more switchable zones of various shapes and /or sizes.

A DSM stack according to the invention already described is applicable:
- to the building notably to monolithic glazing or laminated glazing (plane or curved), double or triple glazing.

Said glazing can be glazing for exterior walls, windows, door, interior partitions (including in humidity area such as shower partition, etc.) or furniture, or other (interior) glazed surfaces. More particularly, the DSM stack can be part (fixed on, with adhesives) of:
- an architectural glazing, i.e. glazing in buildings and on the envelope of buildings,
- an interior glazing such as a room interior glazing, partition glazing, interior windows and doors for offices, hotel rooms, shops, restaurants, homes, private rooms, patient rooms, operation rooms, intensive care unit rooms and x-ray rooms, bathrooms, for example shower compartment glazing,
- equipment manufacturing (e.g. glazing for refrigerators, microwaves, furniture, lighting, ...).
- to projecting screen.

The switchable stack can cover only a part of the building glazing, notably forms a band. Said glazing can be glazing to vehicles such as motor vehicles, buses, railway vehicles or aircraft, to any part of glazing notably curved glazing, laminated or not, such as roof, windshield, lateral glazing, sidelites, etc.

The switchable stack can cover only a part of the vehicle glazing, notably forms a peripheral band (in upper part of windshield, lateral glazing, sidelites) or frame or nearly cover the glazing (in one of several parts) for example for roof.

Preferably, for a high lever of H2, liquid crystals are rod, untwisted, without chiral dopant or twisted nematic liquid crystals.The product could be also devoid of any polarizer. The material can comprise low rate or none of polymers or oligomer or monomer.

The supplier of liquid crystals are Merck KGaA, DIC Corporation, HECHENG Display, Slichem, Daily-polymer Corporation.

The material can comprise only liquid crystals and ions or at least 80% or even 90%, 95%, 96% 97% 98%, 99%, 100% by weight of the material. Spacers can be dispersed within the material.

The material can comprise one or other additives (inert compounds etc) which have no impact on rising (or decay) time and/or haze. For example, additive to enhance solubility of ions (prevent precipitation of ions such ion agglomeration). The material is preferably devoid of ion precipitation thereby we can choose ion concentration to be under solubility limit. Ion concentration could be lower than 1% in weight of material and/or liquid crystals of at least even 90%, 95%, 96% 97% 98%, 99% in weight of material.

The invention and its advantages will be better understood upon reading the following description, which is given solely by way of non-limiting example and which is made in reference to the appended drawings in which:
Figure 1 is a schematic view of a switchable DSM stack 100 in clear state in off stage according to an embodiment of the present invention.
Figure 2 is a schematic view of the switchable DSM stack of figure 1 in scattering state.

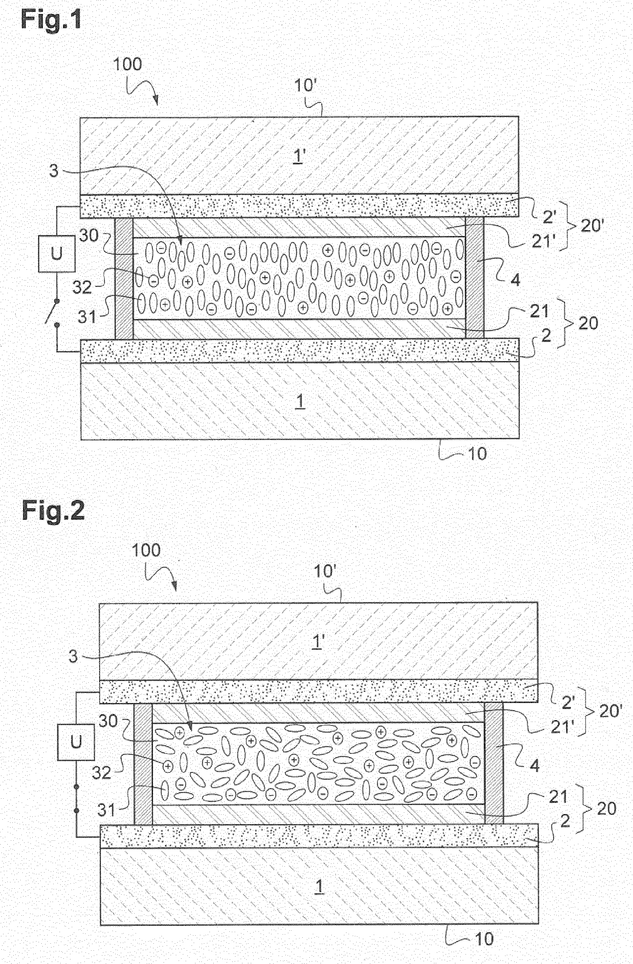

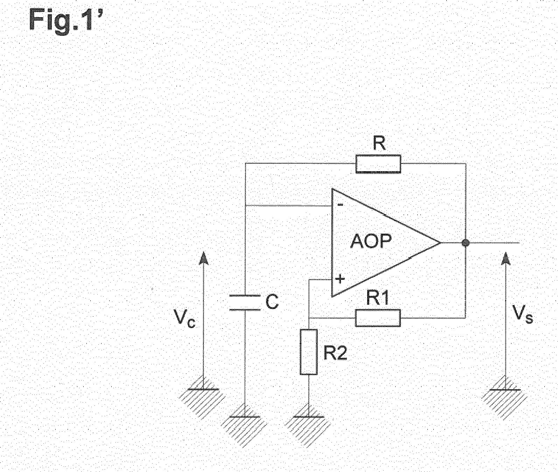

Figure 1' is a schematic driving circuit of a power supply being an alternating voltage of square form for operating the switchable DSM stack.

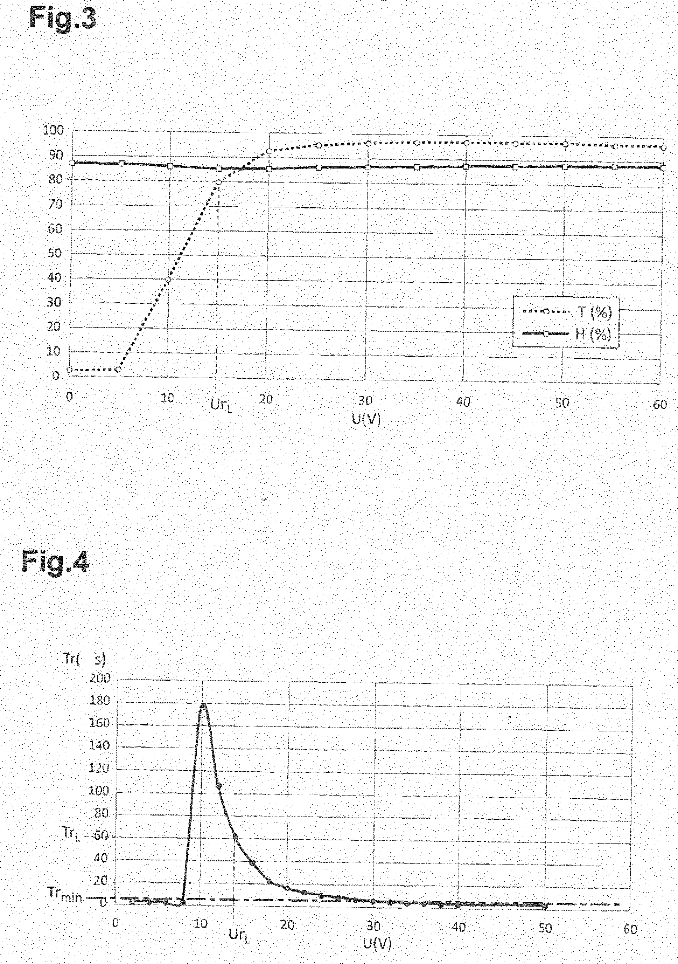

Figure 3 is a graph both showing a haze value H(%) and the luminous transmittance T (%) of switchable DSM stack in function of the applied-voltage U(V) according to an first exemplary embodiment of the present invention.
Figure 4 is a graph showing the rising time Tr required for switchable DSM stack in function of the applied-voltage U(V) according to an embodiment of the present invention.

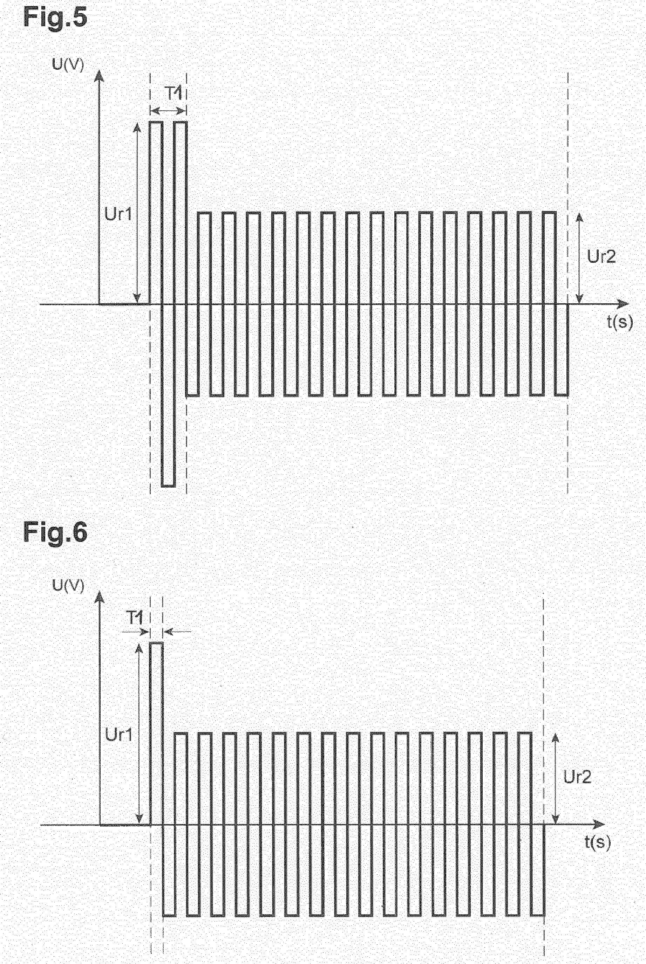

Figure 5 is a timing diagram of the proposed "two phases driving on" method according to an embodiment of the present invention.
Figure 6 is a timing diagram of the proposed "two phases driving on" method according to an embodiment of the present invention.

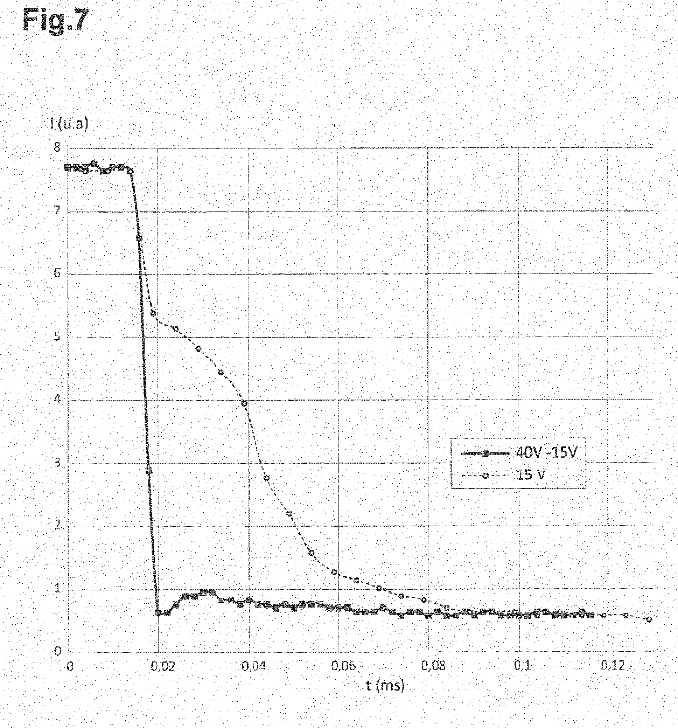

Figure 7 is a graph showing light intensity non-deviated light intensity measurement of switchable DSM stack in function of the time for one phase driving on method and for the claimed two phases driving on method according to an embodiment of the present invention.

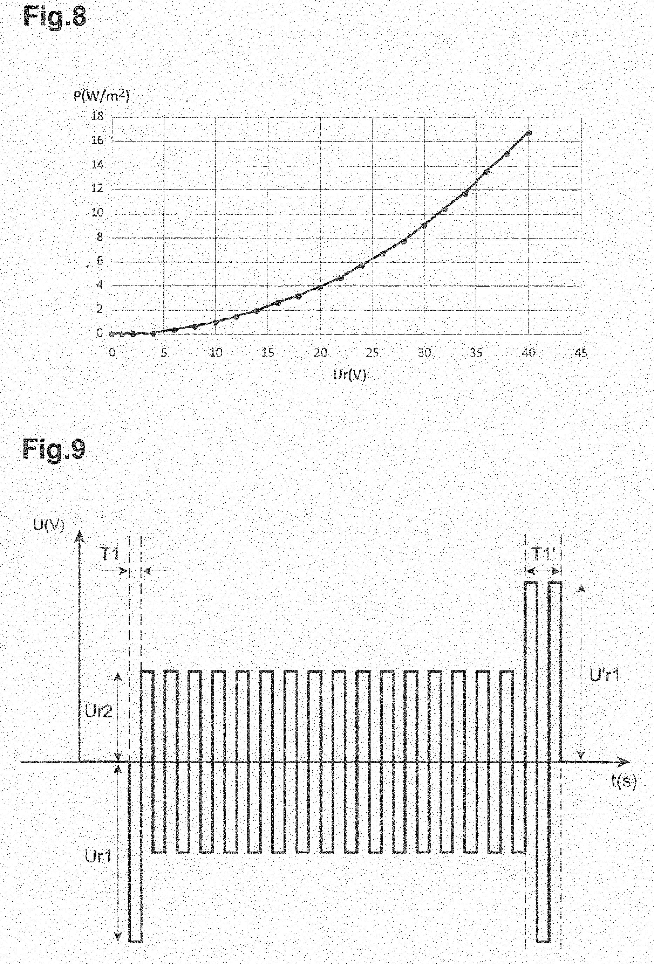

Figure 8 is a graph showing power per square meter of switchable DSM stack in function of the applied voltage Ur(V) according to a first exemplary embodiment of the present invention.
Figure 9 is a timing diagram of the proposed "two phases driving on" method combined to "two phases driving off" method according to an embodiment of the present invention.

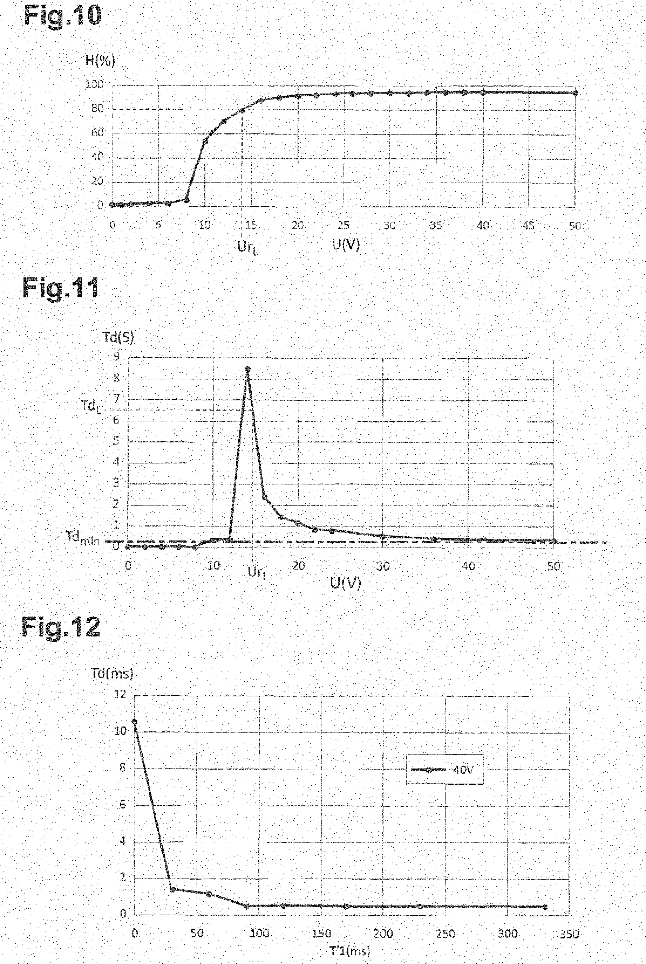

Figure 10 is a graph showing a haze value H(%) of switchable DSM stack in function of the applied-voltage U(V) according to an embodiment of the present invention. We define Ur_{L} for which haze is 80%.
Figure 11 is a graph showing the decay time Td required for switchable DSM stack in function of the applied-voltage U(V) according to said embodiment of the present invention.
Figure 12 is a graph showing the decay time Td for switchable DSM stack in function of the time in function if said another first duration T'1 according to said embodiment of the present invention.

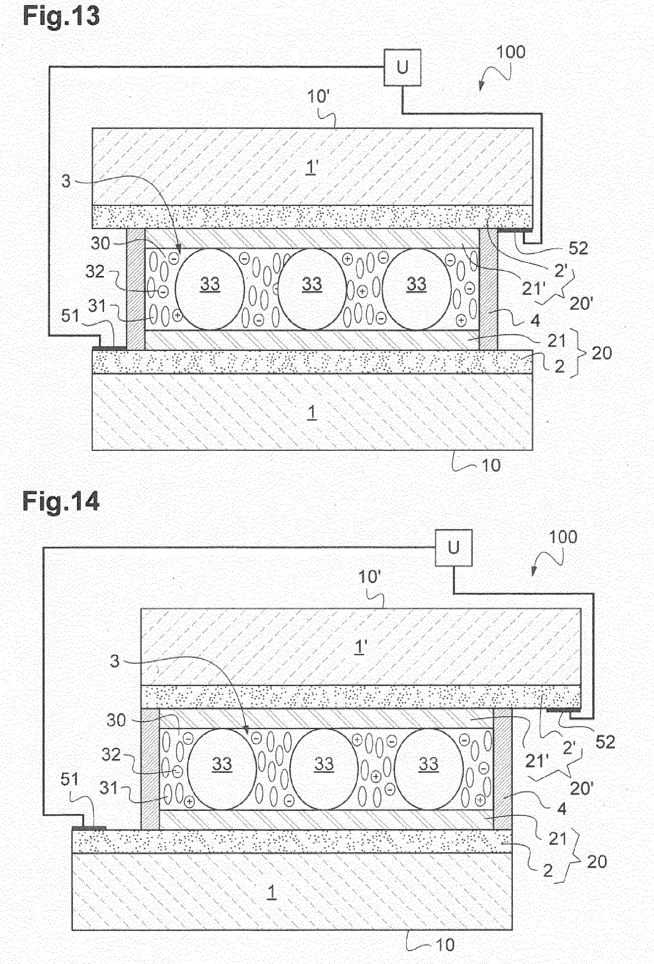

Figure 13 is a schematic cross sectional view of a switchable DSM 100 stack according to the invention
Figure 14 is a schematic cross sectional view of a switchable DSM stack according to the invention in a variant of figure 13.

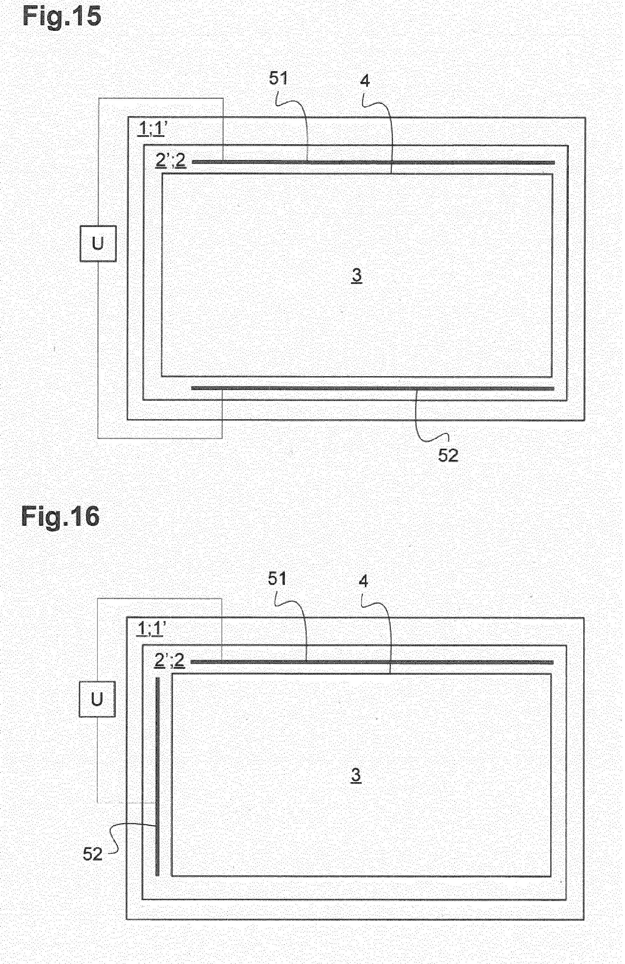

Figure 15 is a schematic facing view of a switchable DSM stack according to the invention.
Figure 16 is a schematic facing view of a switchable DSM stack according to the invention.

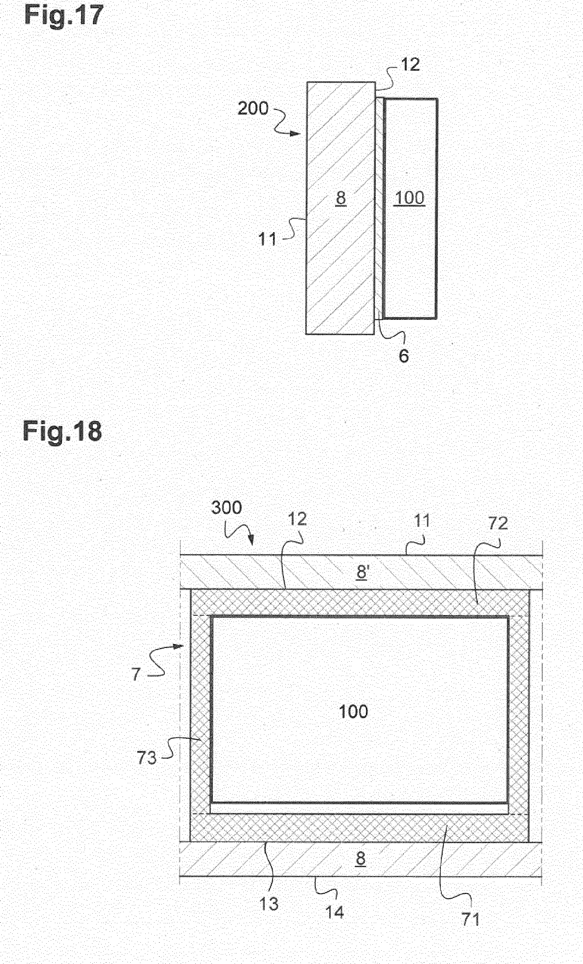

Figure 17 is a schematic cross sectional view of a system 200 according to the invention.
Figure 18 is a schematic cross sectional view of a laminated glazing according to the invention.

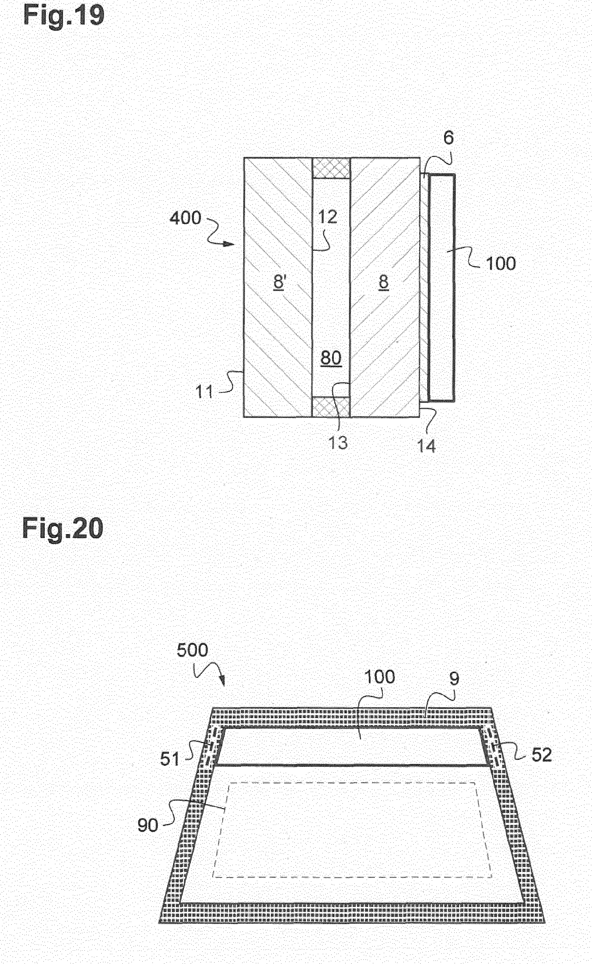

Figure 19 is a schematic cross sectional view of a double glazing unit (DGU) 400 according to the invention.
Figure 20 is a schematic facing view of a laminated glazing 500 comprising a local switchable DSM stack 100 as shown in figure 13

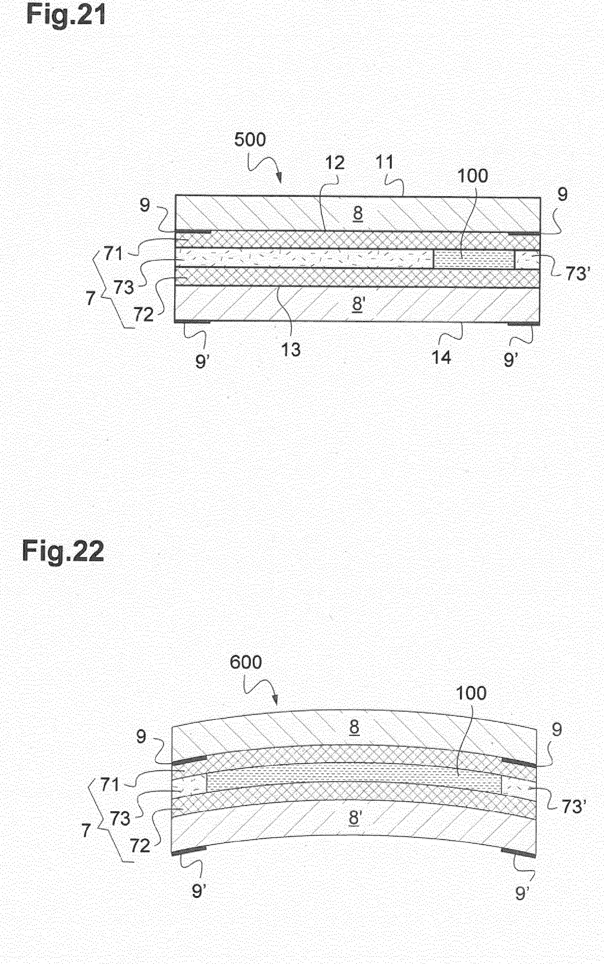

Figure 21 is a cross sectional view of said laminated glazing 500 of figure 20.
Figure 22 is a schematic cross sectional view of a curved laminated glazing 600 comprising switchable DSM stack 100.

Before describing the invention, it is to be understood that it is not limited to the details of construction set forth in the following description. It will be apparent to those skilled in the art having the benefit of the present disclosure that the invention is capable of other embodiments and of being practiced or being carried out in various ways.

It is also to be understood that the dimensions of the different elements are not to scale on the drawings.

Figure 1 is a schematic view of a switchable DSM stack 100 in clear state in off stage according to an exemplary embodiment of the present invention.

The switchable stack 100 comprising two transparent dielectric substrates 1,1', each of said substrates having muticoating 20,20' including one electrode layer 2, 2' and one alignment layer 21, 21' over the electrode layer, and, located between the alignment layers, a liquid crystals based layer 3 of a material 30 comprising nematic liquid crystals 31 and ions 32, (spacers not shown here).

The CL layer is sealed by any seal (polymeric etc) 4 defined an active area.

It uses the Dynamic Scattering Mode (DSM), based on electrohydrodynamic effect induced by the dynamic balance between the rotation of the LC and the diffusion of the ions.

The stack is in transparent clear state (very low Haze level) without voltage and even very low Haze even in large viewing angle, liquid crystals being for example perpendicular to substrates (the first alignment layers being homeotropic forcing the liquid crystals to align).

Substrate can be flexible such as polymeric (polycarbonate, polyethylene terephthalate (PET) or polymethyl methacrylate etc) or ultrathin glass (UTG).

Main exterior faces 10, 10' could be free surfaces or stuck to any device such as glazing unit.

Figure 2 is a schematic view of the switchable DSM stack 100 of figure 1 in scattering state with is in then operation stage.

Under alternating voltage, the stack is in scattering state (very hazy) with voltage, ions movement creating convection cells tending to orientate liquid crystals randomly.

The power supply source is a generator of square periodic voltage at least with said first and second root mean square values Ur1 and Ur2 and even other root mean square value U'r1, at one frequency preferably between 30Hz to 100Hz.

The power supply source includes one or several circuits, each circuit with operational amplifier connected to resistances and capacitance in peculiar forming astable multivibrator.

Figure 1' is a schematic driving circuit of a power supply being an alternating voltage of square form for operating the switchable DSM stack.

The power supply source includes one shared circuit for transitory on and off stage and one circuit for operation stage, each circuit with operational amplifier AOP connected to resistances R1, R2, R and capacitance C forming astable multivibrator.

Figure 3 is a graph both showing a haze value H(%) and the transmittance T (%) of switchable DSM stack in function of the applied-voltage U(V) according to an first exemplary embodiment of the present invention. We define Ur_{L} for which haze is 80%. Transmittance T (%) is constant and above 80%

Figure 4 is a graph showing the rising time Tr required for switchable DSM stack in function of the applied-voltage U(V) according to a first exemplary embodiment of the present invention.

We define Ur_{L} for which haze is 80% and having Tr_{L}.

We define Tmin as asymptotic value

Tr2 is around 40ms at 15V and Tr1 is around 3ms at 40V.

Figure 5 is a timing diagram of the proposed "two phases driving on" method according to a first exemplary embodiment of the present invention.

Such method comprises successively:
- an off stage, in which no voltage is applied to the switchable stack and the switchable stack is in a transparent state,
- a transitory on stage, with application to the switchable stack, for a duration T1, of alternating voltage U1 (preferably square form) defined by a first root mean square voltage Ur1 with a given frequency f1, the switchable stack passing from the transparent state to a first scattering state with first haze H1 of preferably at least 80% during the transitory on stage,
- an operation stage, with application to the switchable stack of second alternating voltage U2 (preferably square form) defined by a second root mean square voltage Ur2 with a given frequency f2 preferably equal to f1, second root mean square voltage Ur2 being lower than first root mean square voltage Ur1, and the switchable stack passing from the first scattering state to a second scattering state defined by a second haze H2 greater or equal to 80%, during the operation stage.

Figure 6 is a timing diagram of the proposed "two phases driving on" method according to a exemplary embodiment of the present invention.

We choose Ur1=40V and Ur2=15V.

T could be a short pulse of few ms at f1=f2= 60Hz, not a complete waveform

Tr2 is around 40ms at 15V and Tr1 is around 3ms at 40V.

Figure 7 is a graph showing light intensity of switchable DSM stack in function of the time for one phase driving on method and for the claimed two phases driving on method according to a first exemplary embodiment of the present invention. We can deduced rising times Tr and switching time Tsw.

Notably, the rise time is captured from a time-dependent scattering light measurement capturing the time interval during which a light intensity measurement varies from 90% (Imax-lmin) to 10% (Imax-Imin), Imax being the maximum light intensity in clear transparent state, Imax being the maximum light intensity in scattering state. Notably, the rise time is captured from a time-dependent scattering light measurement capturing the time interval during which a collimated light intensity measurement varies from 90% (Imax-Imin) to 10% (Imax-Imin), Imax being the maximum light intensity (obtained in clear transparent state), Imin being the minimum light intensity (obtained in scattering state).

The measurement of the rise time can be based on the light intensity measurement using a collimated source such as laser source, notably He-Ne Laser at 632.8nm. The intensity measurement here is the light intensity measured by a sensor positioned exactly in front of a collimated source with a collection angle of +-2.5° the light beam from the source passing through the switchable stack between the source and the sensor. We can use a detector such as silicon photo Detectors.

Figure 8 is a graph showing power per square meter of switchable DSM stack in function of the applied voltage Ur(V) according to a first exemplary embodiment of the present invention.

Figure 9 is a timing diagram of the proposed "two phases driving on" method combined to "two phases driving off" method according to an exemplary embodiment of the present invention.

It different form timing gaigram of figure 6 in which there is after the operation stage, another transitory stage, with application, for another duration T'1, to the switchable stack of another first alternating voltage at frequency f'1 defined by another first root mean square voltage U'r1, the switchable stack passing from the second scattering state to another scattering state with given haze of preferably at least 80% during said another transitory stage, said another first root mean square voltage U'r1 being greater than said second root mean square voltage Ur2.

Figure 10 is a graph showing a haze value H(%) of switchable DSM stack in function of the applied-voltage U(V) according to an second exemplary embodiment of the present invention. We define Ur_{L} for which haze is 80%.

Figure 11 is a graph showing the decay time Td required for switchable DSM stack in function of the applied-voltage U(V) according to said second exemplary embodiment of the present invention.

Figure 12 is a graph showing the decay time Td for switchable DSM stack in function of the time in function if said another first duration T'1 according to said second exemplary embodiment of the present invention.

Figure 13 is a schematic cross sectional view of a switchable DSM 100 stack according to the invention

The switchable stack 100 comprising two transparent dielectric substrates 1,1', each of said substrates having muticoating 20,20' including one electrode layer 2, 2' and one alignment layer 21, 21' over the electrode layer, and, located between the alignment layers, a liquid crystals based layer 3 of a material 30 comprising nematic liquid crystals 31 and ions 32, and spacers33 The CL layer is sealed by any seal (polymeric etc) 4 defined an active area.

Substrate can be flexible such as polymeric (polycarbonate, polyethylene terephthalate (PET) or polymethyl methacrylate etc) or ultrathin glass (UTG).

Main exterior faces 10, 10' could be free surfaces or stuck to any device such as glazing unit.

Electrodes 2, 2' go beyond the active area for making two connections zones notably with two bus bars 51,52 here on opposite side.

Figure 14 is a schematic cross sectional view of a switchable DSM stack according to the invention in a variant of figure 13 wherein we cutted edges of substrates 1,1'.

Figure 15 is a schematic facing view of a switchable DSM stack according to the invention showing the boundaries of seal 4 defining the active area 3, of electrodes 2,2' extended beyond the seal in at least for two connected zones with bus bar lines 51, 52 in opposite longitudinal borders of the substrates 1,1'.

Figure 16 is a schematic facing view of a switchable DSM stack according to the invention showing the boundaries of seal 4 defining the active area 3, of electrodes 2,2' extended beyond the seal 4 in at least for two connected zones with bus bar lines 51, 52 in adjacent (longitudinal and lateral) borders of the substrates 1,1'.

Figure 17 is a schematic cross sectional view of a system 200 comprising a flat monolithic glazing 8 having stuck on one of its main faces 11,12 with adhesive 6 a switchable DSM stack 100 as shown in figure 13.

Figure 18 is a schematic cross sectional view of a laminated glazing 300 comprising two glazing 8, 8' with four mains faces 11, 12 ,13 ,14 and in between an interlayer 7 (such as PVB) in three parts two main films 71, 72,and one frame 73, and embedded in interlayer 7 a switchable DSM stack 100 as shown in figure 13 having more or less thickness of the frame 73.

Figure 19 is a schematic cross sectional view of a double glazing unit (DGU) 400 comprising two glazings 8, 8' spaced from each other by vacuum or air 80 and sealed by a peripheral sealing and a switchable DSM stack 100 as shown in figure 13 stuck (by adhesive 6) in any of the exterior or interior main faces 11,12,13,14 of said DGU.

Figure 20 is a schematic facing view of a laminated glazing 500 comprising a local switchable DSM stack 100 as shown in figure 13.

Said laminated glazing 500 comprising a two glazing 8, 8' and in between an interlayer 7 (such as PVB) in three parts: two main films 71, 72,and one frame 73, and embedded in interlayer 7 a local switchable DSM stack 100 as shown in figure 13 forming a band notably in upper part of the glazing. For example the bus bar 51 and 52 are hidden by enamel black first masking layer 9 forming a frame and present in interior face F2 and by enamel black second masking layer 9' forming a frame and present in exterior face F4 as shown is the facing view of figure 21.

Figure 21 is a cross sectional view of said laminated glazing 600.

Figure 22 is a schematic cross sectional view of a curved laminated glazing 600 comprising switchable flexible DSM stack 100, extending to a major part of the main face of the glazing.

## Claims

1. A method for operating a switchable stack (100), comprising two transparent dielectric substrates (1,1'), each of said substrates having one electrode layer (2, 2') and one alignment layer (21,21') over the electrode layer, and, located between the alignment layers, a liquid crystals based layer of a material (3) comprising nematic liquid crystals (31) and ions (32),
such method comprising successively:
- an off stage, in which no voltage is applied to the switchable stack and the switchable stack is in a transparent state,
- a transitory on stage, with application to the switchable stack, for a duration T1, of alternating voltage U1 defined by a first root mean square voltage Ur1 with a given frequency f1 or of continuous voltage having said value Ur1, the switchable stack passing from the transparent state to a first scattering state with first haze H1 of preferably at least 80% during the transitory on stage,
- an operation stage, with application to the switchable stack of second alternating voltage U2 defined by a second root mean square voltage Ur2 with a given frequency f2, second root mean square voltage Ur2 being lower than first root mean square voltage Ur1, and the switchable stack passing from the first scattering state to a second scattering state defined by a second haze H2 greater or equal to 80%, during the operation stage.

2. A method for operating a switchable stack according to claim 1, wherein for said switchable stack, defining a first rising time Tr1 as response time from transparent to scattering when application of U1 to the switchable stack at frequency f1, said duration T1 being greater or equal to said first rising time Tr1, and for said switchable stack, defining a second rising time Tr2 as response time from transparent to scattering when application of U2 to the switchable stack at frequency f2, said second rising time Tr2 being higher than first rising time Tr1, and T1 being lower to the second rising time Tr2, notably defining voltage Ur_{L2} as being a lowest root mean square voltage value at which alternating voltage at said frequency f2 causes a haze value H_{L2} of the switchable stack to reach 80%, Ur2 is greater or equal to Ur_{L2}.

3. A method for operating a switchable stack as claimed in any of preceding claims, wherein U1 is alternating voltage and frequency f1 is from 0.9f2 to 1.1f2 and preferably f1=f2.

4. A method for operating a switchable stack as claimed in any of preceding claims 2 or 3, wherein the switchable stack being defined by a minimal rising time Trₘᵢₙ as minimal response time from transparent to scattering, and in that defining voltage Ur_{L1} as being a lowest root mean square voltage value at which alternating voltage at said frequency f1 causes a haze value of the switchable stack to reach 80%, the switchable stack being defined by a reference rising time Tr_{L} as response time from transparent to scattering when application of voltage Ur_{L1} with to the switchable stack at said frequency f1, Ur1 being a voltage value in which the rising time Tr1 is lower or equal to
- Trₘᵢₙ +0.1(Tr_{L} - Trₘᵢₙ) and/or lower than 5Trₘᵢₙ,
- or to 0.5*Tr_{L} and/or to Tr_{L}-50ms
T1 being lower than 1,3Tr1.

5. A method for operating a switchable stack as claimed in any of preceding claims, wherein the duration T1 is lower than 20ms, preferably than 10ms.

6. A method for operating a switchable stack as claimed in any of preceding claims, wherein Ur1-Ur2 is more than 5V, notably Ur1 is at most 50V and/or Ur2 at most 25V.

7. A method for operating a switchable stack as claimed in any of preceding claims wherein first voltage is alternating and square form and preferably second alternating voltage has square form, and notably f1=f2.

8. A method for operating a switchable stack as claimed in preceding claims wherein the transitory on stage and the operation stage uses a same power supply, preferably square form, at one frequency preferably from 30Hz to 100Hz.

9. A method for operating a switchable stack as claimed in any of preceding claims wherein it further comprises after the operation stage, another transitory stage, with application, for another duration T'1, to the switchable stack of another first alternating voltage at frequency f'1 defined by another first root mean square voltage U'r1, the switchable stack passing from the second scattering state to another scattering state with given haze of preferably at least 80% during said another transitory stage, said another first root mean square voltage U'r1 being greater than said second root mean square voltage Ur2.

10. A method for operating a switchable stack as claimed in claim 9 wherein for said switchable stack, defining a first decay time Td₁ as response time from scattering to transparent when stopping of voltage U'1 to the switchable stack at frequency f'1 and for said switchable stack, defining a second decay time Td₂ as response time from scattering to transparent when stopping of voltage U2 to the switchable stack at frequency f'1, the first decay time Td₁ being lower than the second decay time Td₂, and said another duration T'1 being greater or equal to a transition time from U2 to U'1.

11. A method for operating a switchable stack as claimed in preceding claims 9 or 10 wherein the switchable stack is defined by a minimal decay time Tdₘᵢₙ as minimal response time from scattering to transparent, in that defining voltage U'r_{L1} as being a lowest root mean square voltage value at which alternating voltage at said frequency f'1 causes the haze value H2 of the switchable stack and defining a reference decay time Td_{L} when stopping application of said given voltage U'r_{L1} to the switchable stack at f'1, U'r1 being a voltage value in which the decay time is lower or equal to:
- Tdₘᵢₙ +0.1(Td_{L} - Tdₘᵢₙ) and/or lower than 5Tdₘᵢₙ,
- or to 0.5*Td_{L}

12. A method for operating a switchable stack as claimed in any of preceding claims 9 to 11, wherein the another duration T'1 is lower than 400ms preferably than 200ms.

13. A method for operating a switchable stack as claimed in any of preceding claims 9 to 12, wherein U'r1-Ur2 is more than 5V, notably U'r1 is at most 50V.

14. A method for operating a switchable stack as claimed in any of preceding claims 9 to 13, wherein U'r1 is equal to Ur1 and f'1=f1.

15. System comprising :
- a switchable stack comprising two transparent substrates, each of them having one electrode and one alignment layer over the electrode, and, located between the alignment layers, a liquid crystals based layer including nematic liquid crystals and ions,
- a power supply source for the implementation of the method as claimed in preceding claims.

16. System as claimed in preceding claim wherein the power supply source is a generator of square periodic voltage at least with said first and second root mean square values Ur1 and Ur2 and even other root mean square value U'r1, at one frequency preferably between 30Hz to 100Hz, power supply source preferably including one or several circuits, each circuit with operational amplifier connected to resistances and capacitance in peculiar forming astable multivibrator.

17. System as claimed in preceding claim wherein the power supply source includes one shared circuit for transitory on and off stage and one circuit for operation stage, each circuit with operational amplifier connected to resistances and capacitance in peculiar forming astable multivibrator.

18. Glazing unit chosen among one or more of the following products : monolithic glazing, laminated glazing, double or triple glazing unit, said glazing unit being curved or plane, including said system as claimed in any of preceding claims 16 or 17.
